# EUROPÄISCHE PATENTANMELDUNG

(11) **EP 4 266 268 A1**
(43) Veröffentlichungstag der Anmeldung: **25.10.2023**
(21) Anmeldenummer: 22168688.4
(22) Anmeldetag: 18.04.2022
(51) Int. Cl.: G07C 9/10, B64F 1/36, G01V 5/00

(54) **SCHLEUSE; SYSTEM, UMFASSEND EINE SCHLEUSE; VERFAHREN ZUR STEUERUNG EINES PERSONENFLUSSES UND/ODER ZUR PERSONENKONTROLLE; COMPUTERPROGRAMMPRODUKT**

(71) Anmelder: dormakaba Deutschland GmbH, 58256 Ennepetal (DE)
(72) Erfinder: Weber, Kai, 58256 Ennepetal (DE)
(74) Vertreter: Balder IP Law, S.L.

(57) **Zusammenfassung**

Schleuse (1), wobei die Schleuse (1) einen Eingang (2) und einen hinter dem Eingang (2) angeordneten Innenbereich (4) umfasst,
wobei, die Schleuse (1) einen Körperscanner (5), und eine optische Wiedergabevorrichtung (7) aufweist,
wobei der Körperscanner (5) zum Scannen eines Körpers einer Person (50) im Innenbereich (4) der Schleuse (1) eingerichtet ist und wobei die Wiedergabevorrichtung (7) zur Anzeige einer Scan-Stellung der Person (50) eingerichtet ist, wobei die Scan-Stellung zum erfolgreichen Scannen des Körpers der Person (50) geeignet ist.

## Beschreibung

Die Erfindung betrifft eine Schleuse, wobei die Schleuse einen Eingang und einen hinter dem Eingang angeordneten Innenbereich umfasst. Ferner betrifft die Erfindung ein System, umfassend eine derartige Schleuse, ein Verfahren zur Steuerung eines Personenflusses und/oder zur Personenkontrolle mithilfe einer Schleuse sowie ein Computerprogrammprodukt.

Derartige Schleusen werden beispielsweise an Flughäfen oder Bahnhöfen verwendet oder als Zutrittslösung für ein Gebäude oder Areal. Um die Sicherheit solcher Einrichtungen zu erhöhen, werden Personenkontrollen durchgeführt, in denen Gefahrenstoffe und/oder Waffen und/oder als Waffen einsetzbare Gegenstände detektiert werden sollen. Häufig finden in diesem Zusammenhang ferner Verfahren zur Identitätsprüfung von Personen, beispielsweise an Flughäfen, statt. Ein Ziel hierbei ist es stets, möglichst sichere Prozesse zu implementieren. Die Kontrollen führen dabei häufig zu Verzögerungen und sind ein limitierender Faktor für den Gesamtablauf in solchen Einrichtungen. Andererseits ist typischerweise ein hoher Personalaufwand nötig, um die Kontrollen und Prüfungen mit hoher Sicherheit durchzuführen.

Vor diesem Hintergrund stellt sich die Aufgabe, eine Schleuse, ein System, ein Computerprogrammprodukt sowie ein Verfahren bereitzustellen, mit denen eine Steuerung eines Personenflusses und/oder eine Personenkontrolle mit einer hohen Sicherheit erreicht werden kann, wobei bevorzugt Zeitverzögerungen und/oder Aufwand reduziert werden können.

Die Aufgabe wird gelöst durch eine Schleuse, wobei die Schleuse einen Eingang und einen hinter dem Eingang angeordneten Innenbereich umfasst, wobei die Schleuse einen Körperscanner und eine optische, insbesondere elektronische, Wiedergabevorrichtung aufweist, wobei der Körperscanner zum Scannen eines Körpers einer Person im Innenbereich der Schleuse eingerichtet ist und wobei die Wiedergabevorrichtung zur Anzeige einer Scan-Stellung der Person eingerichtet ist, wobei die Scan-Stellung zum erfolgreichen Scannen des Körpers der Person geeignet ist.

Dabei kann die Scan-Stellung eine Position der Person innerhalb des Innenbereichs und/oder die Körperhaltung der Person umfassen. Insbesondere kann die Scan-Stellung dabei einen Rahmen umfassen, innerhalb dessen sich die Person platzieren muss, um das erfolgreiche Scannen des Körpers zu ermöglichen. Dabei kann die Scan-Stellung abhängig von der Größe und/oder von der Kontur und/oder von der Position der Person angepasst sein.

Erfindungsgemäß kann somit eine besonders vorteilhafte Schleuse bereitgestellt werden, mit der eine effiziente Detektion von Waffen und/oder als Waffen einsetzbaren Gegenständen und/oder Gefahrstoffen. Die Möglichkeit wird geschaffen, ohne dass hierfür eigens Sicherheitspersonal an der Schleuse positioniert werden muss, welches Personen die richtige Haltung anzeigt. Es können dadurch Verzögerungen bei einer Personenkontrolle vermieden werden. Hierdurch können Wartezeiten verringert werden, wobei dennoch eine vorteilhafte Sicherheit erreicht werden kann.

Die Schleuse ist vorzugsweise als Personenschleuse ausgebildet, mit der ein Personenfluss steuerbar ist und/oder eine Personenkontrolle durchführbar ist. Insbesondere ist zumindest der Ausgang der Schleuse schließbar, sodass Personen nicht ungehindert die Schleuse passieren können. Vorzugsweise ist ferner der Eingang der Schleuse schließbar.

Bevorzugt ist mithilfe der Schleuse eine Zutrittslösung für ein Areal und/oder ein Gebäude ausgebildet, insbesondere für einen Flughafen und/oder einen Bahnhof. Mithilfe der Schleuse kann eine Steuerung und/oder Kontrolle eines Personenflusses in einen abgesperrten Bereich und/oder einen Sicherheitsbereich erreicht werden.

Vorteilhafte Weiterbildungen und Ausgestaltungen der vorliegenden Erfindung können den abhängigen Ansprüchen entnommen werden.

Bevorzugt erfolgt die Anzeige der Scan-Stellung in animierter Form. Mit anderen Worten erfolgt dies als Animation und/oder bewegtes Bild. Insbesondere kann dazu ein Abbild der Person als Beginn der Animation benutzt werden. Insbesondere kann eine Bewegungsanimation hin zu der geeigneten Scan-Stellung angezeigt werden. Insbesondere kann die Animation mit der zum erfolgreichen Scannen geeigneten Scan-Stellung enden, insbesondere wobei die geeignete Scan-Stellung von dem Abbild der Person abgeleitet wird und/oder einen Rahmen umfasst. Dadurch ist es für die Person leichter verständlich, welche Stellung sie einnehmen muss, sodass Zeit gespart werden kann.

Bevorzugt umfasst die Schleuse zumindest einen Vereinzelungssensor, wobei der Vereinzelungssensor zur Messung einer Personenzahl im Innenbereich der Schleuse eingerichtet ist, bevorzugt wobei der zumindest eine Vereinzelungssensor als 2D-Kamera ausgebildet ist.

Somit kann eine besonders vorteilhafte Schleuse bereitgestellt werden, mit der eine effiziente Detektion von Waffen und/oder als Waffen einsetzbaren Gegenständen und/oder Gefahrstoffen und insbesondere gleichzeitig eine Ermittlung der Personenzahl in der Schleuse möglich ist. Die Möglichkeit wird geschaffen, ohne dass hierfür eigens Sicherheitspersonal an der Schleuse positioniert werden muss, welches die Personen einzeln in die Schleuse leitet oder die Personenzahl in der Schleuse überwacht. Es kann mithilfe des Vereinzelungssensors sichergestellt werden, dass der Körperscanner eine einzelne Person scannt, sodass eine sichere automatisierte Personenkontrolle erreichbar ist. Es können dadurch Verzögerungen bei einer Personenkontrolle vermieden werden. Hierdurch können Wartezeiten verringert werden, wobei dennoch eine vorteilhafte Sicherheit erreicht werden kann.

Darunter, dass der Vereinzelungssensor zur Messung einer Personenzahl im Innenbereich der Schleuse eingerichtet ist, kann gemäß einer Ausführungsform der vorliegenden Erfindung verstanden werden, dass der Vereinzelungssensor derart eingerichtet, dass mithilfe des Vereinzelungssensors zumindest messbar ist, ob die Personenzahl im Innenbereich der Schleuse genau eins beträgt. Somit kann mithilfe des Vereinzelungssensors zumindest ermittelt werden, ob sich eine einzige Person im Innenbereich der Schleuse befindet. Vorzugsweise kann mithilfe des Vereinzelungssensors des Weiteren ermittelt werden, ob sich mehr als eine Person im Innenbereich der Schleuse befindet oder ob sich weniger als eine Person im Innenbereich der Schleuse befindet. Es ist bevorzugt denkbar, dass mithilfe des Vereinzelungssensors auch Personenzahlen im Innenbereich der Schleuse von größer als eins exakt bestimmt werden können.

Insbesondere kann der Vereinzelungssensor selbst oder die Schleuse eine Bildverarbeitungseinheit aufweisen, welche das Signal des Vereinzelungssensors verarbeitet. Das Signal kann drahtgebunden oder drahtlos übertragen werden.

Alternativ kann der Vereinzelungssensor als Time-of-Light-Sensor oder Lidar-Sensor oder Stereo-Kamera ausgebildet sein.

Ein Time-of-Light-Sensor basiert dabei auf einer Lichtlaufzeitmessung. Ein Lidar-Sensor basiert dabei auf einer Laufzeitmessung mit insbesondere gepulsten Laser-Strahlen. Bei der Stereo-Kamera wird die Umgebung mit zwei Kameras gleichzeitig aufgenommen, wobei die zwei Kameras in einem Abstand, insbesondere Augenabstand, zueinander angeordnet sind.

Bevorzugt ist zumindest ein zweiter Vereinzelungssensor angeordnet und zusammen mit dem Vereinzelungssensor dazu eingerichtet, eine vollständige Ansicht, insbesondere eine 360°-Ansicht, der Person zu erfassen.

Somit ist es nicht möglich, dass hinter der Person noch eine weitere Person versteckt ist und diese von der Schleuse nicht erfasst wird. Hierzu können die Signale der beiden Vereinzelungssensoren in einer Einheit, insbesondere einer Bildverarbeitungseinheit, verarbeitet werden, um die vollständige Ansicht zu bilden. Insbesondere kann der zweite Vereinzelungssensor ebenfalls als 2D-Kamera oder als Time-of-Light-Sensor oder Lidar-Sensor oder Stereo-Kamera ausgebildet sein. Der zweite Vereinzelungssensor kann auf einer gegenüberliegenden Seite der Schleuse angeordnet sein. Dadurch kann die komplette Ansicht ermöglicht werden.

Insbesondere kann es vorgesehen, dass der Vereinzelungssensor und/oder der zweite Vereinzelungssensor in einem Deckenbereich der Schleuse an einer seitlichen Wandung der Schleuse und/oder im Innenbereich der Schleuse, insbesondere mittig im Innenbereich der Schleuse, angeordnet ist/sind. Der Vereinzelungssensor ist vorzugsweise derart angeordnet, dass mithilfe des Vereinzelungssensors die Personenzahl im Innenbereich der Schleuse, insbesondere während des Scans des Körperscanners, überprüfbar ist.

Alternativ oder kumulativ kann der Vereinzelungssensor und/oder der zweite Vereinzelungssensor als Infrarotsensor und/oder optischer Sensor, insbesondere mithilfe einer Kamera, ausgebildet sein.

Bevorzugt erfolgt die Messung der Personenzahl und/oder die Anzeige der Scan-Stellung der Person mithilfe eines künstliche Intelligenz-Systems.

Insbesondere kann die Schleuse das künstliche Intelligenz-System aufweisen. Dabei kann das künstliche Intelligenz-System in der Schleuse oder nahe der Schleuse oder entfernt von der Schleuse angeordnet sein. Gemäß einer Ausführungsform der vorliegenden Erfindung ist es möglich, dass das künstliche Intelligenz-System ein Machine-Learning-System, ein Deep-Learning-System, ein neuronales Netz, eine Konturerkennung und/oder eine Musterkennung aufweist und/oder durchführt. Das künstliche Intelligenz-System dient der zuverlässigen Erkennung von Einzelpersonen und/oder der Erstellung einer geeigneten, insbesondere möglichst realitätsnahen, Anzeige der Scan-Stellung der Person.

Bevorzugt wird zur Anzeige der Scan-Stellung ein Abbild der aktuell in der Schleuse befindlichen Person genutzt, insbesondere wobei das Abbild eine räumliche Lage der Person und/oder eine Größe der Person und/oder eine Kontur der Person und/oder das tatsächliche Aussehen der Person, insbesondere in abgeschwächter oder weichgezeichneter Form, berücksichtigt. Insbesondere kann das Abbild auf eine Standardgröße skaliert werden. Bevorzugt weist das Abbild zumindest bereichsweise einen oder mehrere gekennzeichnete Körperbereiche auf, wobei der gekennzeichnete Bereich die Person darauf hinweist, ob die Stellung richtig ist. Die Kennzeichnung kann bspw. durch Farbmarkierungen erfolgen. Alternativ oder kumulativ kann eine Statusmeldung, insbesondere als Farbmarkierung, bevorzugt mittels der Wiedergabevorrichtung und/oder der weiteren Wiedergabevorrichtung, erfolgen, wobei die Statusmeldung anzeigt, ob die Scan-Stellung eingenommen wurde.

Auf diese Weise ist eine passende Anzeige möglich. Die Person kann somit interaktiv und zielführend animiert werden, sich in die richtige Scan-Stellung zu begeben. Somit wird die Effizienz der Schleuse verbessert. Zur Erstellung des Abbildes kann insbesondere das künstliche Intelligenz-System verwendet werden.

Bevorzugt erfolgt mittels des zumindest einen Vereinzelungssensors eine Aufnahme des Innenbereichs nach dem unmittelbaren und/oder mittelbaren Verlassen der Person aus der Schleuse, wobei die Aufnahme mit einer Referenzaufnahme verglichen wird.

Die Referenzaufnahme kann dabei innerhalb einer Datenbank gespeichert sein oder insbesondere periodisch aufgenommen werden. Insbesondere kann dadurch ermittelt werden, ob die Person einen Gegenstand innerhalb des Innenbereichs vergessen hat. Wenn beim Vergleich ein Unterschied ermittelt wird, kann mittels der Schleuse, insbesondere mittels der Wiedergabevorrichtung und/oder einer weiteren Wiedergabevorrichtung, und/oder einer externen Quelle ferner ein Signal an ein Sicherheitspersonal und/oder an die Person ausgegeben werden. Auf diese Weise kann ein automatisches Signal zum Erinnern an vergessene Gegenstände erfolgen. Bevorzugt kann mittels des Vereinzelungssensors, insbesondere mithilfe des künstliche Intelligenz-System, ermittelt werden, um was für einen Gegenstand, bspw. Rucksack, Koffer oder Schuh, es sich dabei handelt.

Bevorzugt dient der Eingang auch als ein Ausgang oder der Ausgang ist gegenüber oder seitlich zu dem Eingang angeordnet.

Insbesondere für den Fall, dass der Eingang auch als Ausgang dient, kann die Schleuse lediglich durch den Eingang betreten und verlassen werden. Dabei kann die Schleuse sonst abgeschlossen sein. Alternativ kann zwar ein separater Ausgang angeordnet sein, welcher jedoch dauerhaft gesperrt ist.

Gemäß einer Ausführungsform der vorliegenden Erfindung ist es vorgesehen, dass die Schleuse eine Eingangstürvorrichtung am Eingang der Schleuse aufweist, wobei mithilfe der Eingangstürvorrichtung der Eingang schließbar und öffenbar ist, wobei die Schleuse eine Ausgangstürvorrichtung am Ausgang der Schleuse aufweist, wobei mithilfe der Ausgangstürvorrichtung der Ausgang schließbar und öffenbar ist.

Für den Fall, dass der Eingang auch als Ausgang dient, kann auch die Eingangstürvorrichtung als Ausgangstürvorrichtung dienen.

Es ist insbesondere denkbar, dass die Eingangstürvorrichtung eine Schiebetür, insbesondere automatische Schiebetür, und/oder eine Drehflügeltür, insbesondere automatische Drehflügeltür, umfasst.

Es ist denkbar, dass die Schleuse eine verschwenkbare und/oder drehbare Türvorrichtung umfasst, wobei die Türvorrichtung zumindest zwischen einer ersten Stellung und einer zweiten Stellung verschwenkbar und/oder drehbar ist, wobei in der ersten Stellung der Ausgang mithilfe der Türvorrichtung geschlossen ist und der Eingang geöffnet ist, wobei in der zweiten Stellung der Eingang mithilfe der Türvorrichtung geschlossen ist und der Ausgang geöffnet ist. Es ist gemäß einer bevorzugten Ausgestaltung denkbar, dass eine Zwischenstellung vorhanden ist, in der mithilfe der verschwenkbaren und/oder drehbaren Türvorrichtung sowohl der Eingang als auch der Ausgang geschlossen sind. Es ist vorzugsweise denkbar, dass die Türvorrichtung während des Scannens mithilfe des Körperscanners und während der Messung mithilfe des Vereinzelungssensors in dieser Zwischenstellung ist, sodass sowohl der Eingang als auch der Ausgang geschlossen sind. Die Schleuse kann somit in besonders vorteilhafter Weise eine drehbare Türvorrichtung mit mindestens einer Öffnung aufweisen, die in Abhängigkeit ihrer Drehstellung:
- den Eingang, oder
- den Ausgang, oder
- sowohl den Eingang als auch den Ausgang
verschließt. Es ist optional denkbar, dass die Türvorrichtung eine Drehstellung aufweist, in der sowohl der Eingang als auch der Ausgang geöffnet sind, insbesondere für den Fall, dass der Eingang auch als Ausgang dient.

Alternativ oder zusätzlich ist es gemäß einer Ausführungsform der vorliegenden Erfindung denkbar, dass die Eingangstürvorrichtung und/oder die Ausgangstürvorrichtung und/oder die verschwenkbare und/oder drehbare oder verschiebbare Türvorrichtung eine oder mehrere der folgenden Vorrichtungen umfasst:
- eine Drehtür,
- eine Karusselltür,
- eine Sicherheitskarusselltür,
- eine Faltschiebetür,
- eine Drehsperre,
- ein Drehkreuz,
- eine Schwenktür.

Gemäß einer Ausführungsform der vorliegenden Erfindung ist es vorgesehen, dass der Körperscanner zur Detektion von Gefahrengegenständen am Körper der Person und/oder an der Kleidung der Person eingerichtet ist. Unter Gefahrengegenständen können hierbei beispielsweise Waffen und/oder als Waffen einsetzbare Gegenstände und/oder andere Gefahrstoffe verstanden werden. Vorzugsweise ist der Körperscanner ein Ganzkörperscanner. Insbesondere kann vorgesehen sein, dass der Körperscanner mithilfe von Röntgenstrahlung und/oder Terahertzstrahlung zum Scannen des Körpers der Person eingerichtet ist. Mithilfe eines derartigen Körperscanners können auch versteckte Gefahrengegenstände, beispielsweise unterhalb der Kleidung, effektiv detektiert werden.

Gemäß einer Ausführungsform der vorliegenden Erfindung ist es vorgesehen, dass der Vereinzelungssensor und der Körperscanner derart eingerichtet sind, dass eine Messung des Vereinzelungssensors und ein Scannen des Körperscanners mittelbar oder unmittelbar nacheinander oder zumindest teilweise gleichzeitig ausgeführt werden. Insbesondere kann dies mithilfe einer, insbesondere elektronischen, Steuerungsvorrichtung erfolgen. Bevorzugt sind dabei elektrische Schaltungsmittel, insbesondere computerimplementierte Mittel, vorhanden, die den Vereinzelungssensor und den Körperscanner derart ansteuern, dass eine Messung des Vereinzelungssensors und ein Scannen des Körperscanners mittelbar oder unmittelbar nacheinander, vorzugsweise ohne dazwischenliegende Pause, oder teilweise gleichzeitig oder vollständig gleichzeitig ausgeführt werden. Somit kann eine besonders hohe Sicherheit erreicht werden. Besonders vorteilhaft ist es dabei denkbar, dass die Messung des Vereinzelungssensors und das Scannen des Körperscanners teilweise oder vollständig gleichzeitig durchgeführt werden, sodass sichergestellt ist, dass die Personenzahl in der Schleuse während des Scannens mit dem Körperscanner bekannt ist. Hierdurch können Täuschungen besonders vorteilhaft unterbunden werden, ohne dass Sicherheitspersonal ununterbrochen an der Schleuse postiert sein muss, um die Personenzahl im Körperscanner während des Scannens zu überwachen. Vorzugsweise ist zumindest der Ausgang der Schleuse während des Scannens mithilfe des Körperscanners und während des Messens mithilfe des Vereinzelungssensors geschlossen. Es ist bevorzugt möglich, dass während des Scannens mithilfe des Körperscanners und während des Messens mithilfe des Vereinzelungssensors sowohl der Eingang als auch der Ausgang der Schleuse geschlossen sind.

Alternativ oder kumulativ kann die Schleuse eingerichtet sein, das folgende Verfahren, insbesondere in der gelisteten Reihenfolge durchzuführen:
- der Eingang ist offen oder wird geöffnet,
- die Person, insbesondere die einzige Person, betritt die Schleuse,
- insbesondere Messung der Personenzahl,
- der Eingang wird geschlossen, vorzugsweise falls eine einzige Person gemessen wurde - andernfalls Warnmeldung und/oder Fehler-Meldung, insbesondere mithilfe der Wiedergabevorrichtung und/oder einer weiteren Wiedergabevorrichtung
- bevorzugt: Messung der Personenzahl, vorzugsweise falls nicht bereits zuvor erfolgt,
- Anzeige der Scan-Stellung, vorzugsweise falls eine einzige Person gemessen wurde - andernfalls Warnmeldung und/oder Fehler-Meldung,
- insbesondere Warten auf das Einnehmen der Scan-Stellung durch die Person,
- bevorzugt Erkennung der Scan-Stellung mittels des Vereinzelungssensors, besonders bevorzugt mithilfe des künstliche Intelligenz-Systems,
- vorzugsweise automatische Auslösung des Scannens des Körpers der Person mittels des Körperscanners mittelbar oder unmittelbar nach der Erkennung der Scan-Stellung,
- Scannen des Körpers einer Person, vorzugsweise nach Einnehmen der Scan-Stellung,
- Öffnen des Ausgangs.
Je nachdem, ob Gefahrengegenstände erkannt wurden, kann die Person aus der Schleuse rausgehen, die Gegenstände abgeben und wieder die Schleuse betreten oder als gefahrenlos den Schleusenbereich verlassen. Ein derartiges Verfahren ist ebenfalls ein Aspekt der Erfindung. Somit kann ein optimaler Energieverbrauch der Schleuse ermöglicht werden. Denn auf diese Weise werden unnötige Scan-Vorgänge vermieden.

Mittels der Messung der Personenzahl vor dem Schließen des Eingangs können unnötige Schließvorgänge vermieden werden. Durch die Anzeige der Scan-Stellung, nur falls eine einzige Person gemessen wurde, kann der einzigen Person schnell signalisiert werden, was weiter zu tun ist. Durch das Warten auf das Einnehmen der Scan-Stellung durch die Person kann das Scannen erst bei eingenommener Scan-Stellung ausgelöst werden, sodass unnötige Scan-Vorgänge vermieden werden. Durch die Erkennung der Scan-Stellung mittels des Vereinzelungssensors, insbesondere mithilfe des künstliche Intelligenz-Systems, kann die Scan-Stellung zuverlässig ermittelt werden. Durch die automatische Auslösung des Scannens des Körpers der Person mittels des Körperscanners mittelbar oder unmittelbar nach der Erkennung der Scan-Stellung, kann das Verfahren weiter automatisiert werden. Somit wird ein schneller Vorgang, insbesondere ohne Personal, ermöglicht.

Ein weiterer Gegenstand der vorliegenden Erfindung ist ein System, umfassend zumindest eine Schleuse gemäß einer Ausführungsform der vorliegenden Erfindung, wobei das System zusätzlich einen vor dem Eingang der Schleuse angeordneten Vorbereich aufweist, wobei der Vorbereich durch eine Zutrittseinrichtung betretbar ist,
wobei an der Zutrittseinrichtung oder in der Umgebung der Zutrittseinrichtung
-- eine Sensoreinrichtung und/oder
-- eine Identitätskontrolleinrichtung und/oder
-- eine Ticketkontrolleinrichtung
angeordnet ist, mit deren Hilfe in den Vorbereich eintretende Personen kontrollierbar sind.

Auf diese Weise wird ein System geschaffen, das einen kontrollierten und sicheren Zugang mit wenig Personalaufwand und hoher Sicherheit ermöglicht.

Insbesondere kann die Sensoreinrichtung als 2D-Kamera oder als Time-of-Light-Sensor oder Lidar-Sensor oder Stereo-Kamera ausgebildet sein. Vorzugsweise kann die Sensoreinrichtung zur Vereinzelung und/oder zur Zählung von Personen eingerichtet sein.

Bevorzugt sind mit Hilfe der Zutrittseinrichtung in den Vorbereich eintretende Personen zählbar,
wobei das System derart eingerichtet ist, dass:
- mithilfe der Sensoreinrichtung und/oder der Identitätskontrolleinrichtung und/oder der Ticketkontrolleinrichtung eine Zählung der in den Vorbereich eintretenden Personen durchgeführt wird,
- mithilfe der Schleuse, insbesondere mithilfe des Vereinzelungssensors der Schleuse, eine weitere Zählung der den Vorbereich durch die Schleuse verlassenden Personen durchgeführt wird,
- mithilfe der Zählung und der weiteren Zählung eine Personenanzahl innerhalb des Vorbereichs ermittelt und/oder überwacht wird.

Die Sensoreinrichtung an der Zutrittseinrichtung oder in der Umgebung der Zutrittseinrichtung ist beispielsweise mithilfe eines Infrarotsensors und/oder eines optischen Sensors, beispielsweise einer Kamera, ausgebildet. Die Sensoreinrichtung kann insbesondere als weiterer Vereinzelungssensor ausgebildet sein.

Gemäß einer bevorzugten Ausführungsform der vorliegenden Erfindung ist es denkbar, dass an der Zutrittseinrichtung des Vorbereichs und/oder in der Umgebung der Zutrittseinrichtung des Vorbereichs eine Identitätskontrolle mithilfe der Identitätskontrolleinrichtung und/oder eine Ticketkontrolle mithilfe der Ticketkontrolleinrichtung für Personen, die durch die Zutrittseinrichtung in den Vorbereich gelangen, durchgeführt wird. Es ist denkbar, dass die Zutrittseinrichtung, insbesondere ausschließlich, dann öffnet, wenn eine mithilfe der Identitätskontrolleinrichtung durchgeführte Identitätskontrolle und/oder eine mithilfe der Ticketkontrolleinrichtung durchgeführte Ticketkontrolle erfolgreich ist, sodass eine Person nur bei erfolgreicher Identitätskontrolle und/oder erfolgreicher Ticketkontrolle in den Vorbereich gelangen kann. Die Identitätskontrolleinrichtung ist beispielsweise zur Erkennung und/oder Kontrolle eines Passdokuments ausgebildet. Die Ticketkontrolleinrichtung ist beispielsweise zur Erkennung und/oder Kontrolle eines Flugtickets und/oder Zugtickets ausgebildet.

Es ist alternativ oder zusätzlich denkbar, dass die Identitätskontrolleinrichtung einen oder mehrere biometrische Sensoren aufweist, beispielsweise zur Gesichtserkennung oder Fingerabdruckerkennung. Bevorzugt ist der zumindest eine Sensor als Kamera ausgeführt. Bevorzugt ist die Identitätskontrolleinrichtung derart eingerichtet, eine Gesichtserkennung und/oder Konturenerkennung durchzuführen. Auf diese Weise können in den Vorderbereich eintretende Personen, insbesondere ohne Ticket oder Ähnliches, kontrolliert, insbesondere auf ihre Identität, und/oder gezählt werden. Dies kann kumulativ mithilfe des künstliche Intelligenz-Systems oder eines weiteren künstliche Intelligenz-Systems erfolgen. Auf diese Weise wird eine große Sicherheit mit wenig Personalbedarf ermöglicht. Es ist denkbar, dass jede erfolgreiche Identitätskontrolle und/oder erfolgreiche Ticketkontrolle gezählt wird, sodass mithilfe der Identitätskontrolle und/oder der Ticketkontrolle eine Zählung der in den Vorbereich eintretenden Personen durchgeführt wird. Es ist denkbar, dass diese mithilfe der Identitätskontrolle und/oder der Ticketkontrolle durchgeführte Zählung mit der weiteren Zählung verglichen wird, wobei die weitere Zählung mithilfe der Schleuse, insbesondere mithilfe des Vereinzelungssensors der Schleuse, durchgeführt wird und wobei die weitere Zählung zumindest die den Vorbereich durch die Schleuse verlassenden Personen betrifft. Somit kann durch die Zählung mithilfe der Identitätskontrolle und/oder der Ticketkontrolle sowie durch die weitere Zählung mithilfe der Schleuse eine Personenanzahl innerhalb des Vorbereichs ermittelt und/oder überwacht werden. Es kann ferner festgestellt werden, ob die insgesamt durch die Zutrittseinrichtung in den Vorbereich eingetretene Personenanzahl mit der über die Schleuse aus dem Vorbereich ausgetretenen Personenanzahl übereinstimmt. Hierdurch kann eine besonders hohe Sicherheit erreicht werden. Es ist dabei in besonders vorteilhafter Weise möglich, einen permanenten Abgleich zwischen der Anzahl an aus- und eintretenden Personen zu realisieren.

Der Vorbereich weist gemäß einer bevorzugten Ausführungsform der vorliegenden Erfindung eine Absperrung und/oder Wandung auf und ist im Normalbetrieb, vorzugsweise ausschließlich durch die Zutrittseinrichtung und/oder weitere Zutrittseinrichtungen, betretbar. Die Schleuse, die ebenfalls eine Verbindung zwischen dem Vorbereich und einer Umgebung herstellen kann, ist vorzugsweise derart eingestellt und/oder wird derart betrieben, dass ein Eintreten aus der Umgebung in den Vorbereich durch die Schleuse im Normalbetrieb unterbunden wird. Bevorzugt ist somit der Vorbereich im Normalbetrieb der Schleuse nicht über die Schleuse betretbar.

Gemäß einer bevorzugten Ausführungsform der vorliegenden Erfindung ist es denkbar, dass im Vorbereich oder angrenzend an den Vorbereich ein Gepäckbeförderungsmittel, insbesondere ein Gepäckband, angeordnet ist. Es ist denkbar, dass eine Person mit ihrem Gepäck durch die Zutrittseinrichtung in den Vorbereich gelangt und dort ihr Gepäck an das Gepäckbeförderungsmittel abgibt. Im Folgenden bewegt sich die Person, ohne ihr abgegebenes Gepäck, in die Schleuse. Nach dem erfolgreichen Durchqueren der Schleuse kann die Person ihr Gepäck wieder in Empfang nehmen. Das Gepäck wird bei seiner Beförderung mithilfe des Gepäckbeförderungsmittels vorzugsweise überprüft und/oder kontrolliert, insbesondere mithilfe einer zusätzlichen Sensoreinrichtung, die zur Ermittlung von Gefahrengegenständen und/oder Gefahrstoffen in dem Gepäck eingerichtet.

Alternativ oder kumulativ kann der Vorderbereich eine Austrittsvorrichtung aufweisen. Bevorzugt kann die Austrittsvorrichtung in dem Fall angeordnet werden, dass der Eingang der Schleuse auch als ein Ausgang dient. An der Austrittvorrichtung oder in der Umgebung der Austrittvorrichtung kann
-- eine weitere Sensoreinrichtung und/oder
-- eine weitere Identitätskontrolleinrichtung und/oder
-- eine weitere Ticketkontrolleinrichtung
angeordnet sein, mit deren Hilfe den Vorbereich verlassende Personen kontrollierbar sind.

Auf diese Weise wird ein System geschaffen, das einen kontrollierten und sicheren Zugang mit wenig Personalaufwand und hoher Sicherheit ermöglicht.

Alternativ oder kumulativ kann für den Fall, dass der Eingang der Schleuse auch als ein Ausgang dient, die Zutrittseinrichtung derart ausgebildet sein, dass die die Schleuse verlassenden Personen den Vorbereich mittels der Zutrittseinrichtung wieder verlassen können. In diesem Fall kann die Zutrittseinrichtung bidirektional zugänglich ausgebildet sein. Für diesen Fall können ist es denkbar, dass die die die Schleuse verlassenden Personen mittels der Zutrittseinrichtung ebenfalls zählbar sind. Auf diese Weise kann ebenfalls die Personenzahl innerhalb des Vorbereichs gezählt werden.

Insbesondere kann die weitere Sensoreinrichtung und/oder die weitere Identitätskontrolleinrichtung, bevorzugt als Kamera ausgeführt, derart eingerichtet sein, eine Gesichtserkennung und/oder Konturenerkennung und/oder Fingerabdruckserkennung durchzuführen. Auf diese Weise können den Vorderbereich verlassende Personen, insbesondere ohne Ticket oder Ähnliches, kontrolliert, insbesondere auf ihre Identität, und/oder gezählt werden. Dies kann mithilfe des künstliche Intelligenz-Systems oder eines weiteren künstliche Intelligenz-Systems erfolgen. Auf diese Weise wird eine große Sicherheit mit wenig Personalbedarf ermöglicht.

Bevorzugt können mit Hilfe der Austrittvorrichtung den Vorbereich verlassende Personen zählbar sein,
wobei das System derart eingerichtet sein kann, dass:
- mithilfe der Sensoreinrichtung und/oder der Identitätskontrolleinrichtung und/oder der Ticketkontrolleinrichtung eine Zählung der in den Vorbereich eintretenden Personen durchgeführt wird,
- mithilfe der Schleuse, insbesondere mithilfe des Vereinzelungssensors der Schleuse eine weitere Zählung der den Vorbereich durch die Schleuse verlassenden Personen durchgeführt wird, und/oder
- mithilfe der Austrittvorrichtung, insbesondere mithilfe der weiteren Sensoreinrichtung, eine zweite Zählung der den Vorbereich durch die Schleuse verlassenden Personen durchgeführt wird,
- mithilfe der Zählung und der weiteren Zählung und/oder der zweiten Zählung eine Personenanzahl innerhalb des Vorbereichs ermittelt und/oder überwacht wird.

Alternativ oder kumulativ kann das System eine Kontroll-Sensoreinrichtung umfassen, welche die Personen zumindest innerhalb des Systems, insbesondere kontinuierlich, verfolgt. Die Kontroll-Sensoreinrichtung kann dabei einen oder mehrere, insbesondere als Kamera ausgebildete, Kontroll-Sensoren umfassen, welche am System verteilt angeordnet sein können. Insbesondere können die Personen dabei mithilfe des künstliche Intelligenz-Systems oder eines globalen künstliche Intelligenz-Systems, insbesondere basierend auf Gesichtserkennung und/oder Konturenerkennung, kontinuierlich verfolgt werden. Auf diese Weise kann der Personenfluss zumindest innerhalb des Systems verlässlich überwacht werden.

Im Fall der Anordnung der Austrittvorrichtung können die den Bereich verlassenden Personen alternativ oder kumulativ zu der weiteren Sensoreinrichtung und/oder der weiteren Identitätskontrolleinrichtung und/oder der weiteren Ticketkontrolleinrichtung mittels einer derartigen Kontroll-Sensoreinrichtung kontrolliert und/oder gezählt werden. Dies wird ermöglicht, weil die Personen mittels der Kontroll-Sensoreinrichtung kontinuierlich verfolgt werden.

Bevorzugt kann mithilfe der Kontroll-Sensoreinrichtung eine globale Zählung der Personenanzahl innerhalb des Vorbereichs durchgeführt werden.

Auf diese Weise kann der Personenfluss zumindest innerhalb des Systems verlässlich überwacht werden.

Insbesondere kann die Schleuse und/oder das System eine weitere Wiedergabevorrichtung aufweisen. Es ist denkbar, dass die weitere Wiedergabevorrichtung derart angeordnet ist, dass eine Warnmeldung, insbesondere eine Warnmeldung betreffend eine Ermittlung eines Gefahrengegenstands mithilfe des Körperscanners, aus dem Innenbereich der Schleuse nicht wahrnehmbar ist. Dies kann beispielsweise vorteilhaft sein, um dem Sicherheitspersonal einen Zeit- und/oder Informationsvorsprung gegenüber einer Person in der Schleuse, die einen Gefahrengegenstand mitführt, zu ermöglichen. Bevorzugt umfasst die weitere Wiedergabevorrichtung eine optische Wiedergabevorrichtung, insbesondere einen Bildschirm. Es ist zusätzlich oder alternativ denkbar, dass die weitere Wiedergabevorrichtung derart angeordnet ist, dass eine Warnmeldung vom Innenbereich der Schleuse aus wahrnehmbar ist.

Insbesondere kann die Wiedergabevorrichtung und/oder die weitere Wiedergabevorrichtung in optischer und/oder akustischer Form der Person innerhalb der Schleuse signalisieren, was für ein erfolgreiches Scannen, insbesondere zusätzlich, notwendig ist und/oder welche Aktionen durch die Person durchzuführen sind, um ein erfolgreiches Scannen zu gewährleisten. Das Signal kann sich dabei auf die Personenzahl und/oder auf vorhandene Gefahrengegenstände, insbesondere deren Stelle, beziehen. Insbesondere kann die Stelle der Gefahrengegenstände mittels der Wiedergabevorrichtung an dem Abbild der Person angezeigt werden.

Es ist denkbar, dass das System derart konfiguriert ist, dass mithilfe der Wiedergabevorrichtung und/oder der weiteren Wiedergabevorrichtung in Abhängigkeit der Messung der Personenzahl mithilfe des Vereinzelungssensors und/oder in Abhängigkeit des Scans des Körpers mithilfe des Körperscanners eine Warnmeldung ausgebbar ist. Die Warnmeldung signalisiert vorzugsweise, dass ein Gefahrengegenstand detektiert wurde und/oder umfasst zusätzliche Informationen zu dem detektierten Gefahrengegenstand, beispielsweise, um welche Art von Gefahrengegenstand es sich handelt und/oder an welcher Stelle der Gefahrengegenstand von der Person in der Schleuse mitgeführt wird.

Zusätzlich oder alternativ signalisiert die Warnmeldung, dass sich mehr als eine Person in der Schleuse befindet.

Beispielsweise ist es möglich, dass mithilfe der Wiedergabevorrichtung und/oder der weiteren Wiedergabevorrichtung Personen in der Schleuse signalisiert wird, dass sich zu viele Personen im Innenbereich der Schleuse aufhalten, wenn der Vereinzelungssensor detektiert, dass sich mehr als eine Person im Innenbereich der Schleuse befindet. Es ist beispielsweise denkbar, dass die weitere Wiedergabevorrichtung teilweise oder vollständig als Teil der Schleuse ausgebildet ist.

Ein weiterer Gegenstand der vorliegenden Erfindung ist ein Verfahren zur Steuerung eines Personenflusses und/oder zur Personenkontrolle mithilfe einer Schleuse gemäß einer Ausführungsform der vorliegenden Erfindung oder mithilfe eines Systems gemäß einer Ausführungsform der vorliegenden Erfindung,
wobei das Verfahren die folgenden Schritte, insbesondere in der gelisteten Abfolge, umfasst:
-- Anzeige der Scan-Stellung,
-- mithilfe des Körperscanners wird ein Körper einer Person im
   Innenbereich der Schleuse gescannt.

Hierdurch kann eine zeit- und/oder energie-effiziente und sichere Personenkontrolle und/oder Steuerung eines Personenflusses erfolgen.

Insbesondere können die beiden Schritte mittelbar oder unmittelbar nacheinander oder zumindest teilweise gleichzeitig ausgeführt werden.

Insbesondere umfasst das Verfahren einen Schritt:
- mithilfe eines Vereinzelungssensors wird eine Personenzahl im Innenbereich der Schleuse gemessen.

Es ist denkbar, dass dieser Schritt vor und/oder mittelbar und/oder unmittelbar nacheinander und/oder zumindest teilweise gleichzeitig mit den Schritten:
-- Anzeige der Scan-Stellung und/oder,
-- mithilfe des Körperscanners wird ein Körper einer Person im Innenbereich der Schleuse gescannt
ausgeführt wird.

Hierdurch kann eine effiziente und sichere Personenkontrolle und/oder Steuerung eines Personenflusses erfolgen. Insbesondere ist es möglich, dass auf die Abstellung von Sicherheitspersonal verzichtet werden kann, welches eigens dafür vorgesehen ist, Personen die Scan-Stellung anzuzeigen und/oder einzeln in einen Körperscanner zu führen.

Das erfindungsgemäße Verfahren ist insbesondere ein computerimplementiertes Verfahren, bei dem ein, mehrere oder alle Schritte des Verfahrens computerimplementiert ausgeführt werden. Insbesondere werden die einzelnen Komponenten der Schleuse und/oder des Systems computerimplementiert angesteuert.

Gemäß einer bevorzugten Ausführungsform der vorliegenden Erfindung ist es möglich, dass -vor dem Scannen des Körpers mithilfe des Körperscanners -, insbesondere vor der Messung der Personenzahl mithilfe des Vereinzelungssensors:
-- sich mindestens eine Person durch den geöffneten Eingang in die Schleuse bewegt, vorzugsweise während der Ausgang der Schleuse geschlossen ist,
-- optional: der Eingang der Schleuse geschlossen wird, nachdem sich die mindestens eine Person durch den geöffneten Eingang in die Schleuse bewegt hat.

Alternativ oder kumulativ ist denkbar, dass -- vor dem Scannen des Körpers mithilfe des Körperscanners, - erfolgt:
-- mittels des Vereinzelungssensors eine einzige Person innerhalb der Schleuse gemessen wurde, vorzugsweise während der Ausgang der Schleuse geschlossen ist,
-- insbesondere wobei der Eingang der Schleuse geschlossen wird, nachdem die einzige Person gemessen wurde,
-- insbesondere wobei eine Anzeige der Scan-Stellung erfolgt ist,
-- insbesondere wobei die Person die Scan-Stellung eingenommen hat.

Insbesondere kann dabei mittels des beschriebenen künstliche Intelligenz-Systems geprüft werden, ob die Scan-Stellung eingenommen wurde.

Somit kann der Energieverbrauch der Schleuse gesenkt werden, da vor dem energieintensiven Scannen möglichst viele Fehler vermieden werden.

Gemäß einer bevorzugten Ausführungsform der vorliegenden Erfindung ist es möglich, dass der Ausgang der Schleuse in Abhängigkeit der Messung der Personenzahl mithilfe des Vereinzelungssensors und/oder in Abhängigkeit des Scans des Körpers mithilfe des Körperscanners geöffnet wird. Der Ausgang der Schleuse ist bevorzugt während der Messung mithilfe des Vereinzelungssensors und während des Scans mithilfe des Körperscanners durch eine Ausgangstürvorrichtung oder eine verschwenkbaren und/oder drehbaren Türvorrichtung verschlossen. Der Ausgang der Schleuse wird vorzugsweise mithilfe der Ausgangstürvorrichtung oder der verschwenkbaren und/oder drehbaren Türvorrichtung in Abhängigkeit der Messung der Personenzahl mithilfe des Vereinzelungssensors und in Abhängigkeit des Scans des Körpers mithilfe des Körperscanners geöffnet. Somit kann eine besonders vorteilhafte Steuerung des Personenflusses erreicht werden, ohne dass hierfür Sicherheitspersonal im Bereich des Körperscanners ununterbrochen zugegen sein muss, um den Personenfluss in den Körperscanner und aus dem Körperscanner zu steuern.

Für den Fall, dass der Eingang auch als Ausgang dient, kann die Schleuse eingerichtet sein, das folgende Verfahren, insbesondere in der gelisteten Reihenfolge durchzuführen:
- der Eingang ist offen oder wird geöffnet,
- die Person, insbesondere die einzige Person, betritt die Schleuse,
- insbesondere Messung der Personenzahl,
- der Eingang wird geschlossen, vorzugsweise falls eine einzige Person gemessen wurde - vorzugsweise andernfalls: Warnmeldung und/oder Fehler-Meldung,
- insbesondere Messung der Personenzahl, vorzugsweise falls nicht bereits zuvor erfolgt,
- Anzeige der Scan-Stellung, vorzugsweise falls eine einzige Person gemessen wurde - vorzugsweise: andernfalls Warnmeldung und/oder Fehler-Meldung,
- insbesondere Warten auf das Einnehmen der Scan-Stellung durch die Person,
- bevorzugt Erkennung der Scan-Stellung mittels des Vereinzelungssensors, besonders bevorzugt mithilfe des künstliche Intelligenz-Systems,
- vorzugsweise automatische Auslösung des Scannens des Körpers der Person mittels des Körperscanners mittelbar oder unmittelbar nach der Erkennung der Scan-Stellung,
- Scannen des Körpers einer Person, insbesondere nach Einnehmen der Scan-Stellung,
- Öffnen des Ausgangs.
Je nachdem, ob Gefahrengegenstände erkannt wurden, kann die Person diese abgeben und wieder die Schleuse betreten oder als gefahrenlos den Schleusenbereich verlassen.

Gemäß einer bevorzugten Ausführungsform der vorliegenden Erfindung ist es möglich, dass die Anzeige der Scan-Stellung mittels der Wiedergabevorrichtung und das Scannen des Körpers mithilfe des Körperscanners mittelbar und/oder unmittelbar nacheinander und/oder zumindest teilweise gleichzeitig, durchgeführt werden. Somit wird ein effizienter Prozess ermöglicht.

Bevorzugt ist es möglich,
-- dass die Anzeige der Scan-Stellung und/oder die Messung der Personenzahl mithilfe des Vereinzelungssensors und das Scannen des Körpers mithilfe Körperscanners, bevorzugt zumindest teilweise gleichzeitig, durchgeführt werden, während ein Ausgang der Schleuse geschlossen ist.

Dabei kann der Eingang auch als ein Ausgang dienen oder der Ausgang gegenüber oder seitlich zu dem Eingang angeordnet sein. Dadurch kann eine hohe Sicherheit ermöglicht werden.

Für den Fall, dass der Ausgang gegenüber oder seitlich zu dem Eingang angeordnet ist, kann ferner:
-- der Ausgang der Schleuse ausschließlich dann geöffnet wird, wenn:
   --- die Messung der Personenzahl mithilfe des Vereinzelungssensors ergibt, dass sich eine einzige Person im Innenbereich der Schleuse befindet, und zusätzlich
   --- das Scannen des Körpers mithilfe des Körperscanners ergibt, dass die Person im Innenbereich der Schleuse keine Gefahrengegenstände mitführt.

Für den Fall, dass der Ausgang gegenüber oder seitlich zu dem Eingang angeordnet ist, ist es besonders vorteilhaft möglich, dass - erst bei und/oder nach einem Austritt einer mithilfe des Körperscanners gescannten Person aus der Schleuse - der Eingang der Schleuse geöffnet wird, so dass die nächste Person in die Schleuse eintreten kann. Hierdurch kann eine vorteilhafte Sicherheit erreicht werden.

Gemäß einer bevorzugten Ausführungsform der vorliegenden Erfindung ist es möglich, dass
--- für den Fall, dass die Messung der Personenzahl mithilfe des Vereinzelungssensors ergibt, dass sich mehr als eine Person im Innenbereich der Schleuse aufhält, und/oder
--- für den Fall, dass das Scannen des Körpers mithilfe Körperscanners ergibt, dass eine Person in der Schleuse mindestens einen Gefahrengegenstand mitführt,
der Ausgang geschlossen bleibt und optional eine Warnmeldung mithilfe der Wiedergabevorrichtung und/oder der weiteren Wiedergabevorrichtung ausgegeben wird.

Ein weiterer Gegenstand der vorliegenden Erfindung ist ein Computerprogrammprodukt, wobei das Computerprogrammprodukt Befehle umfasst, die bei einer Ausführung des Computerprogrammprodukts durch einen Computer, insbesondere eine vorzugsweise elektronische Steuerungsvorrichtung der Schleuse und/oder des Systems, den Computer veranlassen, ein Verfahren nach einer Ausführungsform der vorliegenden Erfindung auszuführen. Der Computer ist vorzugsweise teilweise oder vollständig als Teil der Schleuse ausgebildet und/oder teilweise oder vollständig extern von der Schleuse ausgebildet. Der Computer ist vorzugsweise zur Ansteuerung des Vereinzelungssensors und des Körpersensors, sowie der Eingangstürvorrichtung, der Ausgangstürvorrichtung und/oder der verschwenkbaren und/oder drehbaren Türvorrichtung ausgebildet. Es ist denkbar, dass der Computer eine einzige Computereinrichtung ist oder dass der Computer mehrere verteilte Computereinrichtung umfasst. Die mehreren Computereinrichtungen können insbesondere an unterschiedlichen Orten angeordnet sein, beispielsweise teilweise als Teil der Schleuse und teilweise als Teil einer Überwachungseinrichtung für das Sicherheitspersonal.

Ein weiterer Gegenstand der vorliegenden Erfindung ist ein computerlesbares Speichermedium, umfassend ein Computerprogrammprodukt gemäß einer Ausführungsform der vorliegenden Erfindung.

Für das erfindungsgemäße System, das erfindungsgemäße Verfahren, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit der erfindungsgemäßen Schleuse oder im Zusammenhang mit einer Ausführungsform der erfindungsgemäßen Schleuse beschrieben worden sind. Für die erfindungsgemäße Schleuse, das erfindungsgemäße Verfahren, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit dem erfindungsgemäßen System oder im Zusammenhang mit einer Ausführungsform des erfindungsgemäßen Systems beschrieben worden sind. Für die erfindungsgemäße Schleuse, das erfindungsgemäße System, das erfindungsgemäße Computerprogrammprodukt und das erfindungsgemäße computerlesbare Speichermedium können dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind.

Nachfolgend sollen weitere Vorteile und Einzelheiten der Erfindung anhand der in den Figuren dargestellten Ausführungsbeispiele erläutert werden. Hierin zeigt
- Fig. 1: eine Darstellung einer Schleuse gemäß einem ersten Ausführungsbeispiel der vorliegenden Erfindung;
- Fig. 2: eine Darstellung einer Schleuse gemäß einem zweiten Ausführungsbeispiel der vorliegenden Erfindung;
- Fig. 3: eine schematische Darstellung eines Systems gemäß einem Ausführungsbeispiel der vorliegenden Erfindung.

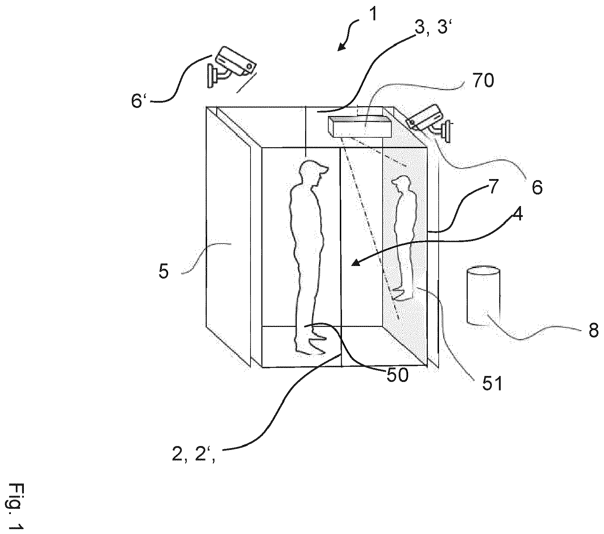

Die Schleuse 1 gemäß Figur 1 umfasst einen Eingang 2 mit einer Eingangstürvorrichtung 2', einen Ausgang 3 mit einer Ausgangstürvorrichtung 3', einen Innenbereich 4 und einen Körperscanner 5. Ferner umfasst die Schleuse 1 eine Wiedergabevorrichtung 7 aufweisend den Projektor 70. Ferner weist die Schleuse 1 zwei Vereinzelungssensoren 6, 6' auf. Ferner ist eine Bildverarbeitungseinheit und ein künstliche Intelligenz-System kombiniert in 8 dargestellt. Eine Person 50 steht in der Schleuse 1. Sie wird mittels der Vereinzelungssensoren 6, 6' erfasst. Mittels der Wiedergabevorrichtung 7 wird ein Abbild 51 der Person 50 gezeigt. Da die Person offensichtlich eine nicht für das Scannen geeignete Stellung einnimmt, würde mittels der Wiedergabevorrichtung 7 im nächsten nicht gezeigten Schritt die Scan-Stellung auf Basis des Abbildes 51 gezeigt werden. Die Bildverarbeitungseinheit und das künstliche Intelligenz-System 8 ermittelt und erstellen dabei das Abbild 51 sowie die Scan-Stellung basierend auf dem Abbild 51. Somit wird die Person interaktiv dazu animiert, die Scan-Stellung einzunehmen, sodass das erfolgreiche Scannen erfolgen kann.

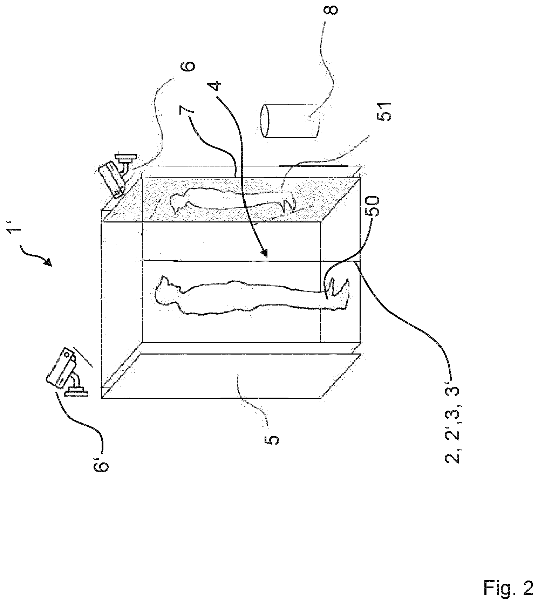

Die Schleuse 1' gemäß Figur 2 unterscheidet sich von der Schleuse 1 nach Figur 1 dadurch, dass der Eingang 2 auch als Ausgang 3 und daher auch die Eingangstürvorrichtung 2' als Ausgangstürvorrichtung 3' dienen sowie durch die als LED-Display ausgeführte Wiedergabevorrichtung 7. Ansonsten ist die Schleuse abgeschlossen ausgebildet.

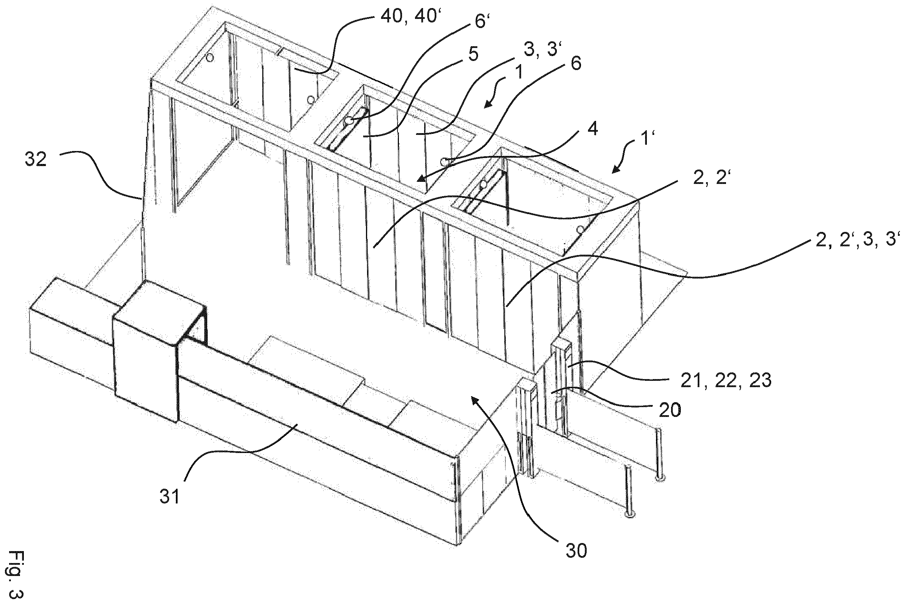

Das System gemäß der Fig. 3 umfasst dabei eine Schleuse 1, mit deren Hilfe ein Personenfluss gesteuert und eine Sicherheitskontrolle durchgeführt werden kann. Vor der Schleuse 1 ist ein Vorbereich 30 angeordnet. Aus dem Vorbereich 30 kann eine Person durch den Eingang 2 der Schleuse 1 in den Innenbereich 4 der Schleuse 1 gelangen. Der Eingang 2 ist mit einer Eingangstürvorrichtung 2' ausgestattet, insbesondere einer Schiebetür. Durch die Eingangstürvorrichtung 2' kann der Eingang 2 geöffnet und geschlossen werden. In der Schleuse 1 ist ein Personenscanner 5 angeordnet, der vorzugsweise mithilfe von Röntgenstrahlen und/oder Terahertzstrahlen einen Körperscan einer Person ermöglicht, die sich im Innenbereich 4 der Schleuse 1 befindet. Ferner umfasst die Schleuse 1 Vereinzelungsscanner 6, 6', welche in dem dargestellten Ausführungsbeispiel in einem Deckenbereich der Schleuse 1 angeordnet sind und mit denen ermittelt werden kann, ob sich eine einzige Person im Innenbereich 4 der Schleuse 1 befindet. Ferner umfasst die Schleuse 1 einen Ausgang 3 mit einer Ausgangstürvorrichtung 3'. Durch den Ausgang 3 können gescannte Personen aus dem Innenbereich 4 der Schleuse 1 heraustreten und so beispielsweise in einen Sicherheitsbereichs eines Flughafens, eines Bahnhofs oder eines anderen Gebäudes gelangen. Mithilfe der Ausgangstürvorrichtung 3' ist der Ausgang 3 der Schleuse 1 öffenbar und schließbar.

Ferner ist im gezeigten Ausführungsbeispiel lediglich beispielhaft auch eine weitere Schleuse 1 gemäß Figur 2 angrenzend an den Vorbereich 30 angeordnet. Die weitere Schleuse 1' kann lediglich in Richtung des Vorbereichs verlassen werden. Bei Anordnung einer derartigen Schleuse 1' müsste daher eine nicht gezeigte Austrittsvorrichtung bspw. im Bereich der Absperrung 32 angeordnet werden, sodass die Personen aus der Schleuse 1' den Vorbereich 30 wieder verlassen können. Alternativ ist es möglich, dass diese Personen den Vorbereich 30 mittels der Zutrittseinrichtung 20 wieder verlassen können, wenn die Zutrittseinrichtung 20 bidirektional begehbar ausgebildet ist.

Des Weiteren ist ein Ausgangsbereich 40 für den Vorbereich 30 vorhanden. Der Ausgangsbereich 40 ist mithilfe einer Türeinrichtung 40' verschlossen und kann bei Bedarf geöffnet werden, beispielsweise für Personen, für die die Schleusen 1, 1' aus körperlichen oder medizinischen Gründen nicht geeignet sind. Der Vorbereich 30 ist ein mithilfe einer Absperrung 32 gegenüber der Umgebung abgesperrter Bereich, der durch eine Zutrittseinrichtung 20 betreten werden kann. Die Zutrittseinrichtung 20 ist derart eingerichtet, dass sie einen Zutritt in den Vorbereich 30 ermöglichen und versperren kann. Beispielsweise umfasst die Zutrittseinrichtung 20 hierfür einen oder mehrere Schwenktürflügel. Alternativ sind auch andere Türtypen denkbar. An der Zutrittseinrichtung 20 ist eine Sensoreinrichtung 23 und/oder eine Identitätskontrolleinrichtung 22 und/oder eine Ticketkontrolleinrichtung 21 angeordnet. Es ist denkbar, dass die Zutrittseinrichtung 20 einer Person den Zutritt in den Vorbereich 30 gewährt, wenn eine Ticketkontrolle mithilfe der Ticketkontrolleinrichtung 21 und/oder Identitätskontrolle mithilfe Identitätskontrolleinrichtung 22 durchgeführt wurde. Auf diese Weise kann die Gewährung des Zugangs zu dem Vorbereich 30 kontrolliert erfolgen. Einerseits kann dadurch sichergestellt werden, dass nur eine Person pro Ticketkontrolle und/oder Identitätskontrolle die Zutrittseinrichtung 20 passiert. Andererseits ist dadurch eine Zählung bzw. eine Begrenzung der Personenzahl innerhalb des Vorbereichs 30 und/oder der Schleusen 1, 1' und/oder des Ausgangbereichs 40 möglich. Insbesondere könnte die Öffnung der Zutrittseinrichtung 20 zumindest vorübergehend gesperrt werden, wenn die Personenanzahl innerhalb der genannten Anlagen eine bestimmte Zahl übersteigt. Ferner ist in dem Vorbereich 30 ein Gepäckbeförderungsmittel 31, insbesondere ein Gepäckband, angeordnet, auf das eine Person im Vorbereich 30 ihr Gepäck, inklusive mitgeführter Gegenstände, legen kann bevor die Person in die Schleuse 1 eintritt.

Gemäß einem Ausführungsbeispiel eines erfindungsgemäßen Verfahrens durchquert eine Person die Zutrittseinrichtung 20 und gelangt so in den Vorbereich 30. Das Durchqueren der Zutrittseinrichtung 20 wird mithilfe der Sensoreinrichtung 23 und/oder der Identitätskontrolleinrichtung 22 und/oder der Ticketkontrolleinrichtung 21 gezählt. In dem Vorbereich 30 gibt die Person ihr Gepäck an das Gepäckbeförderungsmittel 21 ab.

Befindet sich keine Person in der Schleuse 1 ist die Schleuse 1 in einem Zustand, in dem ihr Ausgang 3, beispielsweise mithilfe der Ausgangstürvorrichtung 3', geschlossen ist und in dem ihr Eingang 2 geöffnet ist. Die Person tritt durch den Eingang 2 in den Innenbereich 4 der Schleuse 1. Der Eingang 2 der Schleuse 1 wird geschlossen, beispielsweise mithilfe der Eingangstürvorrichtung 2'. Es ist denkbar, dass der Eingang 2 in Abhängigkeit einer Detektion des Vereinzelungssensors 6 geschlossen wird, insbesondere dann, wenn der Vereinzelungssensors 6 detektiert, dass die Person den Innenbereich 4 betreten hat. Für die im Innenbereich 4 befindliche Person wird ein Körperscan mithilfe des Körperscanners 5 durchgeführt. Vorzugsweise wird gleichzeitig mit dem Scan des Körperscanners 5 mithilfe des Vereinzelungssensors 6 überprüft, dass sich eine einzige Person im Innenbereich 4 der Schleuse 1 befindet. Zeigen der Körperscan und die Messung des Vereinzelungssensors 6 an, dass sich eine einzige Person im Innenbereich 4 befindet und die Person keine Gefahrengegenstände mitführt, öffnet sich der Ausgang 3, sodass die Person die Schleuse durch den Ausgang verlassen kann. Andernfalls, wenn mehr als eine Person im Innenraum 4 detektiert wird oder der Körperscan einen Gefahrengegenstand ermittelt, öffnet sich der Ausgang 3 nicht. Es wird stattdessen vorzugsweise eine Warnmeldung und/oder Fehlermeldung angezeigt, beispielsweise einer Sicherheitsperson und/oder der oder den Personen in der Schleuse 1. Wurde beispielsweise detektiert, dass sich mehr als eine Person im Innenbereich 4 der Schleuse 1 befindet, kann eine akustische und/oder optische Warnmeldung ausgegeben werden, die die Personen im Innenraum 4 der Schleuse 1 auffordert die Schleuse 1 durch den Eingang 3 zu verlassen bis sich lediglich eine Person im Innenbereich 4 aufhält. Wurde ein Gefahrengegenstand mithilfe des Körperscanners 5 detektiert, wird zumindest das Sicherheitspersonal mithilfe der Warnmeldung darauf hingewiesen, sodass es weitere Kontrollen oder Gegenmaßnahmen einleiten kann. Es kann somit eine besonders vorteilhafte Automatisierung erreicht werden, mit der Zeit eingespart werden kann. Gleichzeitig kann vermieden werden, dass an jedem Körperscanner Sicherheitspersonal vorhanden sein muss, welches den Personenfluss in den Körperscanner und aus dem Körperscanner überwacht und steuert.

Das erfolgreiche Durchqueren einer Person durch die Schleuse 1 kann gezählt werden, beispielswiese mithilfe der Öffnung des Ausgangs 3, der Messung des Körperscanners 5 und/oder der Messung des Vereinzelungssensors 6. Diese weitere Zählung kann mit der mithilfe der Sensoreinrichtung 23 und/oder der Identitätskontrolleinrichtung 22 und/oder der Ticketkontrolleinrichtung 21 durchgeführten Zählung verglichen werden. Derart kann beispielswiese überwacht werden, ob die Anzahl der den Vorbereich 30 betretenden Personen mit der Anzahl der Personen übereinstimmt, die den Vorbereich 30 verlassen. Hierdurch kann eine besonders vorteilhafte und automatisierbare zusätzliche Sicherheitsüberprüfung eingerichtet werden. Ferner ist dadurch eine Begrenzung der Personenanzahl innerhalb des Vorbereichs 30 und/oder der Schleusen 1, 1' und/oder des Ausgangsbereichs 40 möglich.

### Bezugszeichenliste

- 1: Schleuse
- 1': weitere Schleuse
- 2: Eingang
- 2': Eingangstürvorrichtung
- 3: Ausgang
- 3': Ausgangstürvorrichtung
- 4: Innenbereich
- 5: Körperscanner
- 6: Vereinzelungssensor
- 6': zweiter Vereinzelungssensor
- 7: Wiedergabevorrichtung
- 8: Bildverarbeitungseinheit / künstliche Intelligenz-System
- 20: Zutrittseinrichtung
- 21: Ticketkontrolleinrichtung
- 22: Identitätskontrolleinrichtung
- 23: Sensoreinrichtung
- 30: Vorbereich
- 31: Gepäckbeförderungsmittel
- 32: Absperrung
- 40: Ausgangsbereich
- 40': Türeinrichtung
- 50: Person
- 51: Abbild
- 70: Projektor

## Patentansprüche

1. Schleuse (1), wobei die Schleuse (1) einen Eingang (2) und einen hinter dem Eingang (2) angeordneten Innenbereich (4) umfasst, wobei, die Schleuse (1) einen Körperscanner (5), und eine optische Wiedergabevorrichtung (7) aufweist,
wobei der Körperscanner (5) zum Scannen eines Körpers einer Person (50) im Innenbereich (4) der Schleuse (1) eingerichtet ist und wobei die Wiedergabevorrichtung (7) zur Anzeige einer Scan-Stellung der Person (50) eingerichtet ist, wobei die Scan-Stellung zum erfolgreichen Scannen des Körpers der Person (50) geeignet ist.

2. Schleuse (1) nach Anspruch 1, wobei die Anzeige der Scan-Stellung in animierter Form erfolgt.

3. Schleuse (1) nach einem der vorhergehenden Ansprüche, wobei die Schleuse (1) zumindest einen Vereinzelungssensor (6) umfasst, wobei der Vereinzelungssensor (6) zur Messung einer Personenzahl im Innenbereich (4) der Schleuse (1) eingerichtet ist, bevorzugt wobei der zumindest eine Vereinzelungssensor (6) als 2D-Kamera ausgebildet ist.

4. Schleuse (1) nach einem der vorhergehenden Ansprüche, wobei zumindest ein zweiter Vereinzelungssensor (6') angeordnet und zusammen mit dem Vereinzelungssensor (6) dazu eingerichtet ist, eine vollständige Ansicht, insbesondere eine 360°-Ansicht, der Person (50) zu erfassen.

5. Schleuse (1) nach einem der vorhergehenden Ansprüche, wobei die Messung der Personenzahl und/oder die Anzeige der Scan-Stellung der Person (50) mithilfe eines künstliche Intelligenz-Systems (8) erfolgt.

6. Schleuse (1) nach einem der vorhergehenden Ansprüche, wobei zur Anzeige der Scan-Stellung ein Abbild (51) der aktuell in der Schleuse (1) befindlichen Person genutzt wird, insbesondere wobei das Abbild (51) eine räumliche Lage der Person (50) und/oder eine Größe der Person (50) und/oder eine Kontur der Person (50) und/oder das tatsächliche Aussehen der Person (50), insbesondere in abgeschwächter und/oder weichgezeichneter Form, berücksichtigt.

7. Schleuse (1) nach einem der vorhergehenden Ansprüche 3 bis 6, wobei mittels des zumindest einen Vereinzelungssensors (6) eine Aufnahme des Innenbereichs (4) nach dem unmittelbaren und/oder mittelbaren Verlassen der Person (50) erfolgt, wobei die Aufnahme mit einer Referenzaufnahme verglichen wird.

8. Schleuse (1) nach einem der vorhergehenden Ansprüche 3 bis 7, wobei der Vereinzelungssensor (6) und der Körperscanner (5) derart eingerichtet sind, dass eine Messung des Vereinzelungssensors (6) und ein Scannen des Körperscanners (5) mittelbar oder unmittelbar nacheinander oder zumindest teilweise gleichzeitig ausgeführt werden.

9. Schleuse (1) nach einem der vorhergehenden Ansprüche, wobei der Eingang (2) auch als ein Ausgang (3) dient oder wobei der Ausgang (3) gegenüber oder seitlich zu dem Eingang (2) angeordnet ist.

10. Schleuse (1) nach einem der vorhergehenden Ansprüche, wobei der Körperscanner (5) zur Detektion von Gefahrengegenständen am Körper der Person (50) und/oder an der Kleidung der Person (50) eingerichtet ist.

11. System, umfassend zumindest eine Schleuse (1) nach einem der vorhergehenden Ansprüche, wobei das System zusätzlich einen vor dem Eingang (2) der Schleuse (1) angeordneten Vorbereich (30) aufweist, wobei der Vorbereich (30) durch eine Zutrittseinrichtung (20) betretbar ist,
wobei an der Zutrittseinrichtung (20) oder in der Umgebung der Zutrittseinrichtung (20)
-- eine Sensoreinrichtung (23) und/oder
-- eine Identitätskontrolleinrichtung (22) und/oder
-- eine Ticketkontrolleinrichtung (21)
angeordnet ist, mit deren Hilfe in den Vorbereich (30) eintretende Personen kontrollierbar sind.

12. System nach Anspruch 11, wobei mit Hilfe der Zutrittseinrichtung (20) in den Vorbereich (30) eintretende Personen zählbar sind, wobei das System derart eingerichtet ist, dass:
- mithilfe der Sensoreinrichtung (23) und/oder der Identitätskontrolleinrichtung (22) und/oder der Ticketkontrolleinrichtung (21) eine Zählung der in den Vorbereich (30) eintretenden Personen durchgeführt wird,
- mithilfe der Schleuse (1), insbesondere mithilfe des Vereinzelungssensors (6) der Schleuse (1), eine weitere Zählung der den Vorbereich (30) durch die Schleuse (1) verlassenden Personen durchgeführt wird,
- mithilfe der Zählung und der weiteren Zählung eine Personenanzahl innerhalb des Vorbereichs (30) ermittelt und/oder überwacht wird.

13. Verfahren zur Steuerung eines Personenflusses und/oder zur Personenkontrolle mithilfe einer Schleuse (1) gemäß einem der Ansprüche 1 bis 10 oder mithilfe eines Systems gemäß einem der Ansprüche 11 bis 12,
wobei das Verfahren die folgenden Schritte, insbesondere in der gelisteten Abfolge, umfasst,:
- Anzeige der Scan-Stellung,
-- mithilfe des Körperscanners (5) wird ein Körper der Person (50) im Innenbereich (4) der Schleuse (1) gescannt.

14. Verfahren nach Anspruch 13,
-- wobei die Anzeige der Scan-Stellung mittels der Wiedergabevorrichtung (7) und das Scannen des Körpers mithilfe des Körperscanners (5) mittelbar und/oder unmittelbar nacheinander und/oder zumindest teilweise gleichzeitig, durchgeführt werden.

15. Computerprogrammprodukt, wobei das Computerprogrammprodukt Befehle umfasst, die bei einer Ausführung des Computerprogrammprodukts durch einen Computer, den Computer veranlassen, ein Verfahren nach einem der Ansprüche 13 bis 14 auszuführen.
